# EUROPEAN PATENT APPLICATION

(11) **EP 4 811 469 A1**
(43) Date of publication of application: **23.09.2026**
(21) Application number: 25164920.8
(22) Date of filing: 20.03.2025
(51) Int. Cl.: H01M 8/0213, H01M 8/0221, H01M 8/0226, H01M 8/0228

(54) **PLATE DEVICE FOR SEPARATING STACKED ELECTROCHEMICAL CELLS AND PRODUCTION METHOD**

(71) Applicant: AVL List GmbH, 8020 Graz (AT); Red Bull Advanced Technology, Tilbrook, Milton Keynes MK7 8AZ (GB)
(72) Inventor: Birger, Nicholas, Basildon, SS15 6LN (GB); Cain, Jon, Basildon, SS15 6LN (GB); Ubeda Abad, Norberto, Basildon, SS15 6LN (GB); Schubert, Thomas, 8323 St. Marein bei Graz (AT); Raibeck, Laura, Vancouver, V5A 4W2 (CA); Gaudreau, Donat, Burnaby, V5A 4W2 (CA); Kennell-Webb, Iain, Burnaby, V5A 4W2 (CA); Collings, Ed, Tilbrook, Milton Keynes, MK7 8AZ (GB); Damerum, Andrew, Tilbrook, Milton Keynes, MK7 8AZ (GB); Gray, Rob, Tilbrook, Milton Keynes, MK7 8AZ (GB)
(74) Representative: Gamper, Bettina

(57) **Abstract**

The present invention proposes a plate device (10) for separating stacked electrochemical cells comprising a sheet element (11) having formed thereon, on at least one side surface, geometrical features of a fluid guidance structure (12) for guiding fluids supplied to or discharged from an electrochemical cell. According to the invention, the sheet element (11) comprises a composite material including at least a fiber layer component (13) and a matrix infusion component (14).

## Description

The present application relates to a plate device for separating stacked electrochemical cells in a cell stack, and a method for producing a corresponding plate device for separating stacked electrochemical cells.

### Technical field of the invention

The device according to the invention is suitable to be integrated in the design and assembly of fuel cell stacks including fuel cells for generating electrical power from an electrochemical reaction of hydrogen and oxygen, or alternatively, in the design and assembly of electrolyser cell stacks including electrolyser cells for producing hydrogen and oxygen from supply of water and applied electrical power.

### Background of the invention

In a cell stack of electrochemical cells, e.g. a fuel cell stack, an active area of the cells including a membrane electrode assembly (MEA) is fixed within a flat cell frame. The cell frames are stacked upon each other while plate devices in terms of separating elements, better known under the term bipolar plates or separator plates, are arranged between each of the cell frames to form, in a stacking direction, boundaries of a fluid chamber around each electrochemical cell together with the cell frame. Within such fluid chamber, these plate devices may also support a guidance of fluids to be supplied or discharged between fluid ports of the cell stack and the active area of the cell.

Since an electrochemical cell stack, like e.g. a PEM type fuel cell stack for mobile applications, may integrate a large number of stacked cells for providing a suitable power density, e.g. 200 to 400 unit cells stacked to form the cell stack of a fuel cell module, it is desired to optimize a thickness dimension and weight of all parts involved in the repetitive arrangement of unit cells in the cell stack, including the aforementioned plate device, i.e. bipolar plate or separator plate. In addition, there are more demands and challenges to be met for an optimized plate device in said arrangement and functionality.

As mentioned before, such plate device shall transfer fluids (process gases, exhaust gases and a liquid coolant) between a cell and fluid ports of the stack across the surface of the plate device while achieving an as uniform distribution as possible. To achieve such uniform distribution of fluids, the plates feature a large number of small channels which form closed tubes or ducts in the stacked assembly.

In this context, the plate device is required to operate for high duration (e.g. 10,000 hours) in a hostile environment having very high humidity, a fully wet environment, high temperature (approximately 100 °C), under continuous through-thickness compressive load applied by the stack assembly. Despite continual exposure to these conditions, the plate device material must not suffer from any change in material properties that would significantly inhibit the function of the cell stack throughout its service life, including, for the longer term, creep and corrosion. On the other hand, the material of the plate device must not leach any chemical species (e.g. hydrogen, air, coolant) into the fluids within the cell stack which could be detrimental to the function of the cells. In addition, the plate device must be durable enough to be handled during assembly without extreme precautions, and in more sophisticated configurations, the plate device may have seals applied thereon by means of injection molding at high pressure. When stacking and compressing the plate device between adjacently stacked cell frames, the plate device must not experience any mechanical malfunctions or brittleness to withstand any tensions caused by the stack compression.

With respect to functionalities of the plate device involved in the operation of the cell stack, the plate device also needs to meet the following criteria on material properties. As one criterion, the plate device must be electrically conductive in a thickness direction for collecting and transmitting the electrical power generated in the cells, i.e. between the plate devices, to an electrical bus arranged at an end of the cell stack. As another criterion, the plate device must be electrically conductive in plane directions to assist in uniformity of picking-up or delivering power across the active area of a fuel cell or electrolyser cell. As a further criterion, the plate device must be thermally conductive to allow heat from the electrochemical reaction or from resistive losses to be transferred into the coolant for heat dissipation via external heat exchangers to avoid overheating of the cell stack.

In the state of art, bipolar plates or separator plates are manufactured from sintered graphite or formed from a titanium sheet metal.

Sintered graphite is an established material that meets the above-mentioned criteria and has a relatively low density of approximately 1.5 g/cm³. However, plates manufactured by sintering are relatively thick, comprising a minimum thickness of approximately 0.75 mm due to the low strength and processing limitations associated to this material.

Titanium sheet material can be pressed under high pressure to form thinner plates, but there are limitations on the geometric features that can be formed, considering that the sheet starts at a constant thickness and is stretched, i.e. thinned, to form features like corrugations for fluid channels. Hence, the sheet will rupture at critical edges of these geometrical features during pressing or other mechanical stress during assembly. Current state of the art in plate production from titanium material achieves a viable plate thickness down to ~0.2 mm. However, titanium has a higher density of approximately 4.4 g/cm3 that causes a significant gain on the total mass of a cell stack.

Furthermore to consider, for obtaining the best uniformity of distribution which enables the highest machine energy efficiency, the development of the plates has led to significantly smaller channels, which impose formability challenges in the manufacturing process. Therefore, the material selection is partially driven by the available manufacturing processes that can achieve the very small surface geometric features.

The demand to achieve a small machine package size, also typically communicated as volumetric power density of a cell stack, urges a need to reduce the plate thickness to an absolute minimum, whilst still being acceptably impermeable to prevent fluids leaking or mixing by transmitting through the plates. When the plates are stacked in a total number of e.g. 200 to 400 repetitive units, the thickness reduction of each plate is significant to an overall dimension and mass of a cell stack.

As mentioned before, it is desired to achieve the highest electrical conductivity to minimize resistive losses when transferring electrical energy to or from the cells to minimize required capacity of cooling circuit and to optimize overall system efficiency.

### Summary of the Invention

It is an object of the invention to overcome the described problems in the state of art. More particular, it is an object of the invention to propose a technique that provides improvements of bipolar plates or separator plates in at least one aspect of: the reduction of plate thickness, the reduction of plate mass, the formability of small surface geometric features, and/or the minimization of resistive losses in electrical energy transfer.

The object is solved by a plate device having the features of claim 1 and a corresponding production method having the steps of claim 11. Further features and details of the invention result from the dependent claims, the specification, and the drawings. Features and details described in connection with the claimed plate device according to the invention naturally also apply in connection with the claimed production method according to the invention, and vice versa, so that the individual aspects of the invention are or can always be mutually referred to in the disclosure.

The invention proposes a plate device for separating stacked electrochemical cells, comprising a sheet element having formed thereon, on at least one side surface, geometrical features of a fluid guidance structure for guiding fluids supplied to or discharged from an electrochemical cell. According to the invention, the structured sheet element comprises a composite material including at least a fiber layer component and a matrix infusion component.

Moreover, the invention analogously proposes a method for producing a plate device for separating stacked electrochemical cells, comprising the steps of:
- infusing, at least in part, a fiber layer component with a liquid curable matrix infusion component, for preparing a sheet element of a corresponding composite material; and
- pressing the sheet element from opposite sides by a pressing tool providing, on at least one of pressing surfaces, geometrical features for forming into the sheet element corresponding geometrical features of a fluid guidance structure for guiding fluids supplied to or discharged from an electrochemical cell.

Hence, for the first time, the invention proposes a plate device and a manufacturing thereof for use as a bipolar plate or separator plate in an electrochemical cell stack, made of a fiber-based composite material including a component of one or more fiber layers infused with a liquid component which cures into a solidified matrix.

Due to the before named criteria on material properties, such kind of composite materials have not been considered or intentionally excluded from the choice of materials for the present application, i.e. in the state of art regarding production of bipolar plates or separation plates in electrochemical cell stacks.

However, electrically conductive fibers, like carbon fibers are readily available in a format known as a "veil", e.g. non-woven tissues of fibers classified by different weights per area, e.g. several grams per square meter (GSM) up to some hundred grams per square meter. These veils are exceptionally thin, since these are not intended for structural purposes, but typically for applications of electro-magnetic interference screens. These thin veils are formed under high pressure in a pressing mold to achieve the geometric conformance as designed. In the pressing tool the resin impregnates the carbon fiber veils, displacing the air between the fibers, and excess resin is squeezed out on edges of the pressing mold while carrying the entrapped air with it.

The solidifying matrix infusion component 14 is form fixing the fibers in the sheet element and the geometrical features of the final plate device. The fiber layer component is known for its light weight and tear-resistance supporting and reinforcing the plate device in all plane directions. Hence, the invention enables to produce a thin and lightweight yet durable sheet element at low electrical resistance and sufficient mechanical strength for the described application in electrochemical cell stacks.

More particular, as a first advantage, bipolar plates built according to the invention have met all the functional and compatibility requirements whilst combining the lower density of sintered graphite at 1.5 g/cm3 with the lowest thickness of titanium at ~0.2mm thickness.

As a second advantage, with focus on volumetric power density of a stacked system assembly and formability of geometrical features, experimental stretch targets of bipolar plates built according to the invention even led to a further reduction of plate thickness below 0.2 mm reaching down to a final target of 0.1 mm. This thickness has been achieved without detriment to any other functional requirements.

As a third advantage, with focus on gravimetric power density of a stacked system assembly, the thin bipolar plates built according to the invention do not only deliver all functional requirements at less volume, but also establish a severe reduction of approximately half of an overall mass of a fully assembled electrochemical cell stack.

At the same time, due to support of properties regarding low electrical resistance and low thermal resistance of fibers used, the bipolar plates built according to the invention met the above named material property criteria for functional requirements, wherein distinctive measures for setting and tuning these properties constitute further aspects of the invention as explained in the following below.

According to an advantageous further feature of the invention, the matrix infusion component is infused into at least a part of the fiber layer component with respect to a thickness direction and/or plane directions of the plate device. The extend of infusion, or alternatively, a ratio of a mass or a volume of the resin matrix infused and soaked into a mass or a volume the fiber layer allows to set up different properties like an overall mass, mechanical properties, or wetting out property on surfaces, as well as electrical resistance in contact with the side surfaces of the resulting plate device.

According to an advantageous further feature of the invention, the fiber layer component comprises carbon fibers, preferably prepared in the form of a non-woven veil. This kind and format of arranged fibers enhances the electrical conductivity while providing a thin and even distribution of fibers across the plane directions.

According to an advantageous further feature of the invention, the matrix infusion component comprises a curable resin, preferably a soft solidifying resin. Such kind of resin, for example an epoxy-based resin, provides the properties of form flexibility, ductility and high impact-resistance which is beneficial to the durability of the resulting plate device and helps avoiding cracks or any defects from brittleness when the plate device is exposed to a continuous state of compression between cell frames of adjacent cells in a compressed cell stack.

According to an advantageous further feature of the invention, the fiber layer component comprises a laminate of at least two fiber layers. By using more than one layer of fiber structure, a higher mechanical strength is achieved.

According to an advantageous further feature of the invention, the matrix infusion component is infused into a central region of the fiber layer component in the thickness direction, wherein the central region incorporates two facing side surfaces of the at least two fiber layers. This laminate or sandwich structure enables a central infusion of resin matrix into the fibers so as to obtain a resin saturated core in the fiber layer component. On the other hand, at the surface, free ends of exposed carbon fibers may stay non-infused from the resin matrix for enhancing electrical conductivity when applying any electrical surface contact on the plate device.

According to an advantageous further feature of the invention, the composite material of the sheet element additionally comprises a conductive powder component especially including metallic particles dispersed within the structured sheet element. The conductive power component can also be represented by a non-metallic powder, such as graphite, carbon or graphene plates. Particles of the metallic or conductive powder component may be mixed and dispersed into a liquid phase of the matrix infusion component or may be applied onto the fiber layer component before infusion of the resin matrix. The kind of metallic material, the particle size, and the added amount of the metallic powder component in relation to the other components enhance the electrical and thermal conductivity of the composite material for the plate device.

According to an advantageous further feature of the invention, the sheet element comprises a thickness of less than 0.2 mm. This dimension ensures a severe reduction in volumetric and gravimetric power density of any design of electrochemical cell stacks known in the state of art.

According to an advantageous further feature of the invention, the sheet element comprises an electrical resistance across the thickness direction of less than 0.2 Ohm. This property ensures low heat generation by resistive losses in electrical energy transfer through the plate device and a corresponding low demand of cooling power while enhancing the overall system efficiency in an electrochemical cell stack comprising such plate device between each unit cell assembly.

According to an advantageous further feature of the invention, the afore mentioned production method may comprise a step of:
- thermally conditioning the sheet element for liquifying, solidifying, or curing the matrix infusion component of the composite material.

The supply of thermal energy to the composite material may take place before, after, or during the step of pressing, e.g. via surfaces of the pressing tool. Furthermore, a liquid state or thermally forced liquified state of the matrix infusion component might be conducted before the step of infusing, depending on the properties of the resin used.

According to an advantageous further feature of the invention, during the step of pressing, a distance between the opposing pressing surfaces of the pressing tool is set to a predetermined distance. By setting such distance in the tool, a predefined and reproducible thickness is achieved for the plate device resulting after the step of pressing.

According to an advantageous further feature of the invention, the step of infusing comprises infusing and superimposing at least two fiber layers so that the fiber layer component comprises a laminate of the at least two fiber layers. This modification results in a laminate or sandwich structure of the fiber layer component having advantages in mechanical strength or an opportunity to form a centrally arranged core of resin matrix in the fiber layer component.

Further objectives, advantages, features and applications of the present invention arise from the following description of the exemplary embodiments with reference to the drawings. In the drawing:
- Fig. 1: shows a schematic cross-section of a plate device according to an embodiment of the invention;
- Fig. 2: shows a schematic cross-section of a plate device according to a modification of the embodiment in Fig. 1;
- Fig. 3: shows a schematic cross-section of a plate device according to another embodiment of the invention;
- Fig. 4: shows a schematic representation of a method step for producing a plate device according to the invention; and
- Fig. 5: shows a schematic representation of another method step for producing the plate device according to the invention.

### Detailed description of the invention

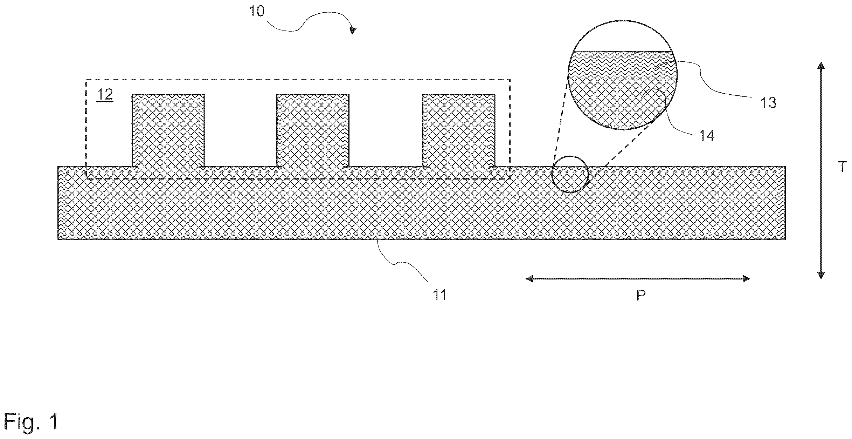

Fig. 1 shows a schematic representation on a longitudinal cross-section of a plate device 10. The plate device 10 is a known component in the form of a bipolar plate or separator plate to be placed between stacked unit cell assemblies in a fuel cell stack or an electrolyser cell stack (not depicted). The plate device 10 is essentially formed by a plate shaped sheet element 11 and has a fluid guidance structure 12 on one side surface of the sheet element 11. Alternatively, the plate device 10 comprises two fluid guidance structures 12 oppositely exposed on both side surfaces of the sheet element 11. The fluid guidance structure 12 has geometrical features in e.g. a corrugated or stepwise shape that form open channels or ducts that will be closed in a stacked assembly by an adjacent component of a repetitive unit cell stack arrangement of the cell stack. The fluid guidance structure 12 guides fluids like process gases or a coolant along plane directions P between an active area of an electrochemical cell assigned to the plate device 10 and fluid supply ports or fluid discharge ports running through all cell plane levels in the cell stack. The geometrical features of the fluid guidance structure 12 protrude in a thickness direction T from the surface of the sheet element 11 or the plate device 10. Alternatively, the geometrical features are recessed with respect to the surface of the sheet element 11 or the plate device 10, Alternatively, the fluid guidance structure 12 includes a mix of geometrical features protruding and geometrical features being recessed with respect to the surface of the sheet element 11 or the plate device 10.

The sheet element 11 and the fluid guidance structure 12 are made of composite material including a mix of a fiber layer component 13 and a matrix infusion component 14. The fiber layer component 13 is formed by an essentially planar arrangement of fibers. The fiber layer component 13 consists of carbon fibers and has a gravimetrical specification in a range of 50 to 300 grams per square meter (GSM). In the embodiment of Fig. 1, the fiber layer component 13 is formed by one layer of a non-woven carbon fiber veil. The matrix infusion component 14 consists of a liquid or liquifiable resin, particularly an epoxy-resin, which is infused and soaked up by the fiber veil and impregnates the fibers. In a solidified state of the resin used in the matrix infusion component 14, it forms a cured or cross-linked resin matrix between the impregnated fibers and supports the non-woven fiber veil resulting in a form fixed shape of the plate device 10 including the fluid guidance structure 12.

A mass ratio or volume ratio between the fiber layer component 13 and the matrix infusion component 14 in the composite material can be set by the gravimetrical specification of the fiber veil and an amount of the soaked-up matrix infusion component 14 added to the composite material. In the embodiment of Fig. 1, the volume of the fiber layer component 13 is not filled to a complete extent of the sheet element 11 in the thickness direction T, nor to a complete extent of the shape of the plate device 10 including the fluid guidance structure 12. In this embodiment, a distribution of the matrix infusion component 14 within the body of the fiber layer component 13 is targeted to fade out in outer surface regions of the sheet element 11. Such fade out promotes exposing free ends of carbon fibers at the surface of the sheet element 11 in purpose of a better electrical surface contact of the plate device 10 when conducting electrical power through a stack arrangement based on the better electrical conductivity of exposed carbon fiber ends compared to the resin matrix.

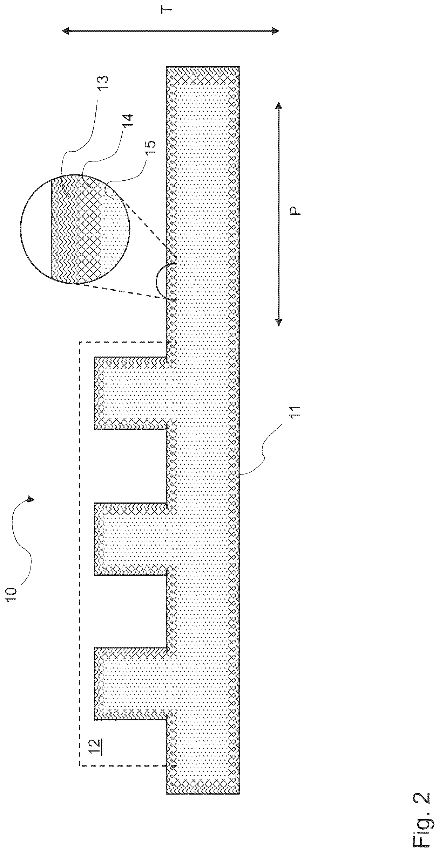

Fig. 2 illustrates a modification of the embodiment of the plate device 10 of Fig. 1 with respect to the incorporated composite material. In this modification, the composite material comprises an additive component represented by a conductive powder component 15, especially a metallic powder component. The additive component can also be represented by a non-metallic powder, such as graphite, carbon or graphene plates. The metallic conductive component 15 is distributed within the composite material, i.e. throughout the body of the plate device 10 in purpose of enhancing material properties of the composite material in terms of electrical and thermal conductivity with respect to an arbitrary orientation. An even distribution is obtained by mixing the particles of the conductive powder component 15 into the liquid phase of the matrix infusion component 14 prior to infusion into the fiber layer component 13. Alternatively, the conductive powder component 15 can be locally applied or distributed in the body of the plate device 10, e.g. for a spatially oriented tuning of electrical and thermal conductivity of the composite material with emphasis on thickness direction T and plane directions P of the plate device 10. Such locally oriented distribution can be achieved by e.g. coating or filling the fiber layer component 13 with the particles of the metallic conductive component 15 prior to infusion of the matrix infusion component 14. In a preferred embodiment, the conductive powder component 15 comprises metallic particles of nickel and copper.

It is noted that the different components 13, 14 and 15 of the composite material are distinctively patterned in the Figs. 1 to 5. However, the distinctive patterns are meant for illustrative purpose only and do not necessarily indicate an intended or best mode of regional distribution or gradual fading of each composite material component 13, 14 and 15 within the body of the plate device 10. As an example, in a modified embodiment, it is preferred to obtain an equal or even higher concentration of added particles of the conductive powder component 15 at outer surface regions of the plate device 10.

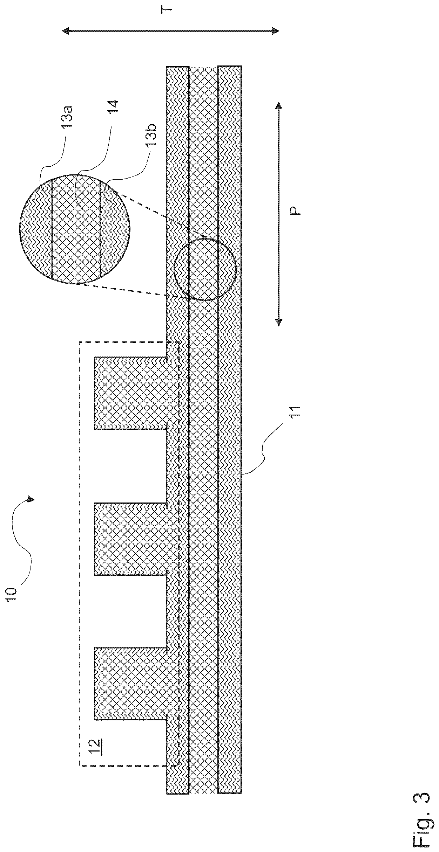

Fig. 3 shows another embodiment of the plate device 10 having a different fiber layer component 13 compared to the embodiment in Figs. 1 and 2. In this embodiment, the fiber layer component 13 is made up of two fiber layers 13a and 13b connected by the matrix infusion component 14 applied in between facing surfaces of same so as to form a laminate or sandwich structure. In the embodiment of Fig. 3, the fiber layers 13a and 13b are non-woven carbon fiber veils having a gravimetrical specification in a range of 10 to 200 grams per square meter. The two fiber layers 13a and 13b may have an asymmetrical set up of different gravimetrical specification or original thickness among each other, e.g. in purpose of an asymmetrically formability of the fluid guidance structure 12 on only one side surface of the sheet element 11. Contrary to the patterns of each composite material component 13, 14 and 15 as illustrated in Fig. 3, the matrix infusion component 14 penetrates all the way through the fiber layers 13a, 13b of the fiber layer component 13, or alternatively throughout most of its extent in the thickness direction T. The embodiment with respect to a fiber layer component 13 including two or more fiber layers 13a, 13b enables or facilitates applying the matrix infusion component 14 in a central region of the fiber layer component 13, thereby contributing to an even or targeted distribution of the matrix infusion component 14 throughout a multilayered fiber layer component 13.

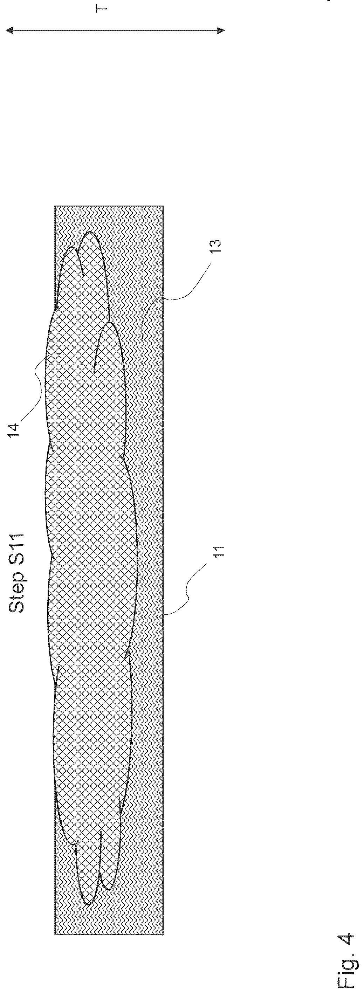

Fig. 4 symbolically illustrates a first basic step S11 of the method for producing the plate device 10. In this step of infusing S11, the above-described composite material is prepared by applying the matrix infusion component 14 in a liquid phase onto or into the fiber layer component 13. Depending on the property of resin used in the matrix infusion component 14, a thermal conditioning by heating for liquification of the matrix infusion component 14 can be performed prior to step of infusing S11. Also, in case of using the conductive powder component 15, a mixing of particles of the conductive powder component 15 into the liquid phase of the matrix infusion component 14 can be performed prior to step of infusing S11. Alternatively, a coating or a diffusive intrusion of the conductive powder component 15 onto or into the fiber layer component 13 can be performed prior to step of infusing S11.

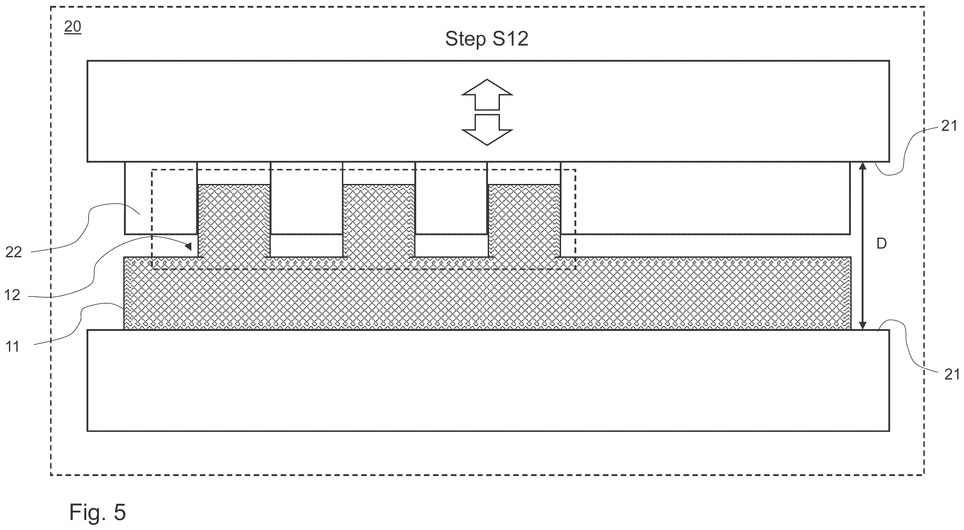

Fig. 5 represents a subsequent basic step S12 of the method for producing the plate device 10. The sheet element 11 of the as prepared composite material is placed into a structured mold cavity of pressing surfaces 21 of a pressing tool 20. The structured mold cavity comprises geometrical features 22 in a complementary arrangement to the geometrical features of the fluid guidance structure 12 so as to press and form the fluid guidance structure 12 into the sheet element 11 during the step of pressing S12. A distance D between the opposing pressing surfaces 21 of the pressing tool 20 is set to a predetermined distance by means of shims to achieve reproducible results in thickness of the plate device 10.

During the step of pressing S12, the matrix infusion component 14 in its liquid state may distribute according to a local compression pattern applied by the geometrical features 22 of the pressing surfaces 21 and fixes, upon cured solidification, the fiber layer component 13 in the complementary form of the fluid guidance structure 12. Depending on the property of resin used in the matrix infusion component 14, a thermal conditioning or a light radiation of the composite material for curing or cross-linking the resin matrix can be performed during, after or, at least in part, prior to the step of pressing S12.

The foregoing explanations of the embodiments describe the present invention solely by way of examples. Of course, individual features of the embodiments can be freely combined with one another, provided this is technically expedient, without departing from the scope of the present invention.

### List of reference characters

- 10: plate device
- 11: sheet element
- 12: fluid guidance structure
- 13: fiber layer component
- 13a: fiber layer
- 13b: fiber layer
- 14: matrix infusion component
- 15: conductive powder component
- 20: pressing tool
- 21: pressing surface
- 22: geometrical features

- D: distance of pressing surfaces
- P: plane directions
- T: thickness direction

## Claims

1. Plate device (10) for separating stacked electrochemical cells, comprising:
a sheet element (11) having formed thereon, on at least one side surface, geometrical features of a fluid guidance structure (12) for guiding fluids supplied to or discharged from an electrochemical cell;
**characterized in that**
the sheet element (11) comprises a composite material including at least a fiber layer component (13) and a matrix infusion component (14).

2. Plate device (10) according to claim 1, wherein the matrix infusion component (14) is infused into at least a part of the fiber layer component (13) with respect to a thickness direction (T) and/or plane directions (P) of the plate device (10).

3. Plate device (10) according to claim 1 or 2, wherein the fiber layer component (13) comprises carbon fibers, preferably prepared in the form of a non-woven veil.

4. Plate device (10) according to one of the preceding claims, wherein the matrix infusion component (14) comprises a resin, preferably a curable, soft solidifying resin.

5. Plate device (10) according to one of the preceding claims, wherein the fiber layer component (13) comprises a laminate of at least two fiber layers (13a, 13b).

6. Plate device (10) according to claim 5, wherein the matrix infusion component (14) is infused into a central region of the fiber layer component (13) in the thickness direction (T), wherein the central region incorporates two facing side surfaces of the at least two fiber layers (13a, 13b).

7. Plate device (10) according to one of the preceding claims, wherein the composite material of the sheet element (11) additionally comprises a conductive powder component (15) including metallic particles dispersed within the sheet element (11).

8. Plate device (10) according to one of the preceding claims, wherein the sheet element (11) comprises a thickness of less than 0,2 mm.

9. Plate device (10) according to one of the preceding claims, wherein the sheet element (11) comprises an electrical resistance across the thickness direction of less than 0,2 Ohm.

10. Electrochemical cell stack comprising the plate device (10) according to one of claims 1 to 9, wherein the plate device (10) is arranged in between stacked cells of the electrochemical cell stack.

11. Method for producing a plate device (10) for separating stacked electrochemical cells, comprising the steps of:
- infusing (S11), at least in part, a fiber layer component (13) with a liquid phase of a matrix infusion component (14), for preparing a sheet element (11) of a corresponding composite material; and
- pressing (S12) the sheet element (11) from opposite sides by a pressing tool (20) providing, on at least one of pressing surfaces (21), geometrical features (22) for forming into the sheet element (11) corresponding geometrical features of a fluid guidance structure (12) for guiding fluids supplied to or discharged from an electrochemical cell.

12. Method for producing a plate device (10) according to claim 11, further comprising a step of:
- thermally conditioning (S13) the sheet element (11) for liquifying, solidifying or curing the matrix infusion component (14) of the composite material.

13. Method for producing a plate device (10) according to claim 11 or 12, wherein, during the step of pressing (S12), a distance (D) between the opposing pressing surfaces (21, 22) of the pressing tool (20) is set to a predetermined distance.

14. Method for producing a plate device (10) according to one of claims 11 to 13, wherein the step of infusing (S11) comprises infusing and superimposing at least two fiber layers (13a, 13b) so that the fiber layer component (13) comprises a laminate of the at least two fiber layers (13a, 13b).

15. Plate device product (10) resulting from the method for producing a plate device (10) according to one of claims 11 to 14.
